**Europäisches Patentamt**

**European Patent Office**

**Office européen des brevets**

(11) Veröffentlichungsnummer: **0 287 748 B1**

## (12) EUROPÄISCHE PATENTSCHRIFT

(45) Veröffentlichungstag der Patentschrift: **01.07.92**

(21) Anmeldenummer: **87810258.1**

(22) Anmeldetag: **23.04.87**

(51) Int. Cl.⁵: **B23C 1/10**, B23Q 1/16

(54) Werkzeugmaschine.

(43) Veröffentlichungstag der Anmeldung:
**26.10.88 Patentblatt 88/43**

(45) Bekanntmachung des Hinweises auf die
Patenterteilung:
**01.07.92 Patentblatt 92/27**

(84) Benannte Vertragsstaaten:
**CH DE FR IT LI**

(56) Entgegenhaltungen:
**EP-A- 0 087 672**
**DE-C- 303 777**
**FR-A- 2 526 343**

(73) Patentinhaber: **Maschinenfabrik Mikron AG**
**Alleestrasse 11**
**CH-2501 Biel(CH)**

(72) Erfinder: **Pruvot, François**
**Chemin de Ponfilet 82**
**CH-1093 La Conversion(CH)**
Erfinder: **Jeannerat, Denis**

**CH-2884 Montenol(CH)**
Erfinder: **Oberson, Alfred**
**Rue du village 35**
**CH-1095 Savuit/Lutry(CH)**

(74) Vertreter: **Steiner, Martin et al**
**c/o AMMANN PATENTANWÄLTE AG BERN**
**Schwarztorstrasse 31**
**CH-3001 Bern(CH)**

**Beschreibung**

Die vorliegende Erfindung betrifft eine Werkzeugmaschine gemäss Oberbegriff des Anspruchs 1.

Eine Werkzeugmaschine dieser Art ist in der EP-A-0 087 672 beschrieben. Der Spindelkopf dieser Maschine ist um eine rechtwinklig zu seiner Spindelachse stehende Achse schwenkbar um die Spindel in die beiden Arbeitsstellungen zu bringen, wobei die Spindel je nach ihrer Arbeitsstellung direkt oder über die Zwischenwelle mit der Antriebswelle im Spindelkopfträger gekuppelt ist. Diese Anordnung ist zwar einfach, aber die Werkzeugaufnahme der Spindel bzw. ein in dieselbe eingesetztes Werkzeug befindet sich in erheblichem Abstand von der Schwenkachse des Spindelkopfes, derart, dass ein in die Spindel eingesetztes Werkzeug sich in den beiden Arbeitsstellungen an weit auseinanderliegenden Stellen befindet.

Ziel vorliegender Erfindung ist es, diesen Nachteil zu vermeiden und bei einfachem Aufbau die Anordnung so zu treffen, dass ein in die Spindel eingesetztes Werkzeug sich für beide Schwenk- bzw. Arbeitsstellungen der Spindel im wesentlichen an derselben Stelle befindet. Dieses Ziel wird an einer Maschine gemäss Oberbegriff von Patentanspruch 1 mit den Merkmalen gemäß kennzeichnentem Teil des Anspruchs 1 erreicht.

Vorteilhafte Besonderheiten der erfindungsgemässen Werkzeugmaschine sind in den abhängigen Ansprüchen beschrieben.

Die Erfindung wird nun anhand eines in der Zeichnung dargestellten Ausführungsbespiels näher erläutert.

Figur 1     zeigt Seitenansicht der Werkzeugmaschine mit der Spindel in vertikaler Position,

Figur 2     zeigt den Spindelkopfträger der Werkzeugmaschine mit der Spindel in horizontaler Arbeitsstellung, und

Figur 3     zeigt den Spindelkopf und den angrenzenden Teil des Spindelkopfträgers, teilweise im Schnitt, teilweise in Ansicht.

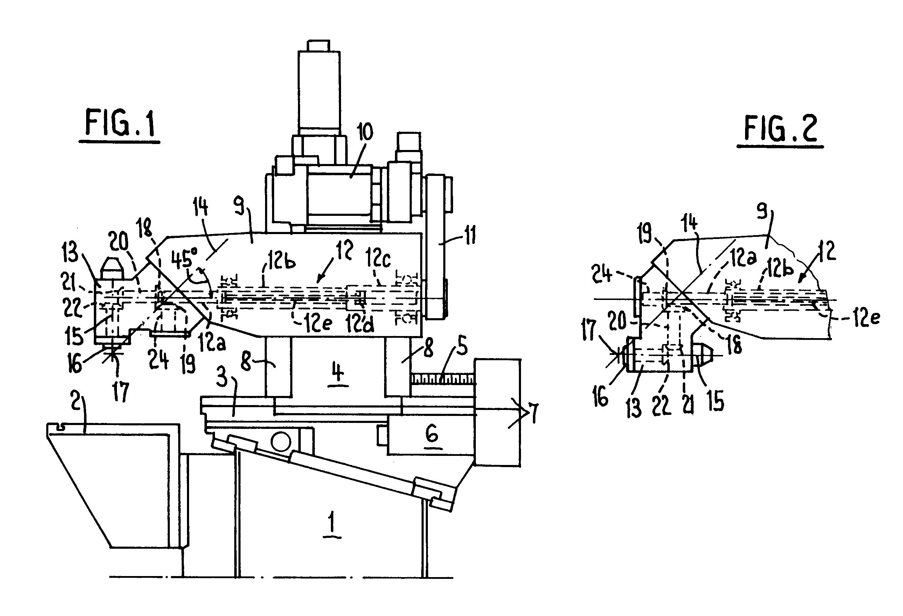

Figur 1 zeigt eine schematische Seitenansicht der Werkzeugmaschine, deren Bett 1 einen starr befestigten Aufspanntisch 2 für Werkstücke, sowie einen längsverschiebbaren Kreuzschlitten 3 als Führung eines querverschiebbaren Ständers 4 aufweist. An Vertikalführungen 8 des Ständers 4 ist der Spindelkopfträger 9 vertikal verschiebbar geführt. Mittels Spindel 5 kann der Ständer 4 vom Motor 6 über ein Getriebe 7 in Querrichtung verschoben werden. Die Längs- und Vertikalverschiebungen des Kreuzschlittens 3, beziehungsweise Spindelkopfträgers 9 werden mit denselben, nicht dargestellten Mitteln bewerkstelligt. Auf dem Spindelkopfträger ist der Hauptantriebsmotor 10 angeordnet, welcher über einen Zahnriemen 11 die im Spindelkopfträger horizontal liegende Antriebswelle 12 anzutreiben gestattet. Ein Spindelkopf 13 ist um eine um 45° geneigte Achse 14 um 180° schwenkbar am Spindelkopfträger 9 angeordnet. Der Spindelkopf kann daher in zwei zur Achse 14 spiegelbildliche Arbeitsstellungen gemäss Figuren 1 und 2 gebracht werden, in welchen die Spindelachse 15 senkrecht beziehungsweise horizontal steht. Das nicht dargestellte, in die Spindel 16 eingesetzte Werkzeug befindet sich für beide Arbeitsstellungen im wesentlichen am selben Ort, nämlich beim Schnittpunkt 17 der Achsen 14 und 15.

Die Figuren 1 und 2 zeigen den Antriebsmechanismus der Spindel 16 schematisch. Es ist angedeutet, dass die Antriebswelle 12 aus drei Teilen 12a, 12b und 12c besteht. Der Wellenteil 12c ist hierbei als rotierender Zylinder ausgebildet, welcher dazu dient, den Wellenteil 12a mittels eines Kolbens 12d über eine Kolbenstange 12e im hohlen Wellenteil 12b axial zu verschieben. Die Wellenteile 12a, 12b und 12c sind drehfest miteinander verbunden, bzw. gekuppelt. Das in den Figuren 1 und 2 linke Ende des Wellenteils 12a ist als Kupplungsteil ausgebildet, welcher in eine Kupplungshülse je eines Kegelrades 18 (Figur 1) oder 19 (Figur 2) eingreifen kann, in welchem Falle der Wellenteil 12a je mit dem betreffenden Kegelrad drehfest gekuppelt ist. Das Kegelrad 18 sitzt auf einer Zwischenwelle 20, die mittels Kegelrädern 21 und 22 mit der Spindel 16 gekuppelt ist. Die Kegelräder 18 und 19 stehen ständig im Eingriff, wobei das Kegelrad 19 mittels einer Hilfswelle 24 im Spindelkopf 13 gelagert ist. Alle Getrieberäder befinden sich somit im Spindelkopf in fester gegenseitiger Lage und in ständigem gegenseitigem Eingriff. Es sind dabei nur zwei einfache 90°-Kegelradpaare erforderlich. Bei vertikaler Spindel gemäss Figur 1 erfolgt der Spindelantrieb vom Motor 10 über den Riemen 11 die Wellenteile 12c, 12b, und 12a, die Zwischenwelle 20 und die Kegelräder 21, und 22. Bei horizontaler Spindel gemäss Figur 2 erfolgt der Antrieb vom Wellenteil 12a über das nun mit ihm gekuppelte Kegelrad 19, das Kegelrad 18, die Zwischenwelle 20 und die Kegelräder 21 und 22. Zur Ueberführung des Spindelkopfes aus der einen in die andere Arbeitsstellung wird jeweils zuerst der Wellenteil 12a mittels des als Zylinder ausgebildeten Wellenteils 12c axial nach rechts in Figuren 1 beziehungsweise Figur 2 zurückgezogen, und damit ausgerückt, worauf der Spindelkopf um 180° um die Achse 14 verschwenkt wird. Dann wird der Wellenteil 12a wieder axial nach links verschoben und in das vor ihm liegende Kegelrad 18 oder 19 beziehungsweise in dessen Kupplungsbuchse eingeschoben. Sollte hierbei die Achse des Kegelrades 18 bzw. 19 nicht ganz genau mit der Achse der Antriebswelle übereinstimmen, ergeben sich keine nachteiligen Konsequenzen, weil die Antriebswelle, deren Teil 12a erst in erheblicher Entfernung vom jeweiligen Kegelrad 18 oder 19 wieder gelagert ist, eine eventuelle leichte Achsabweichung ohne weiteres ausgleicht.

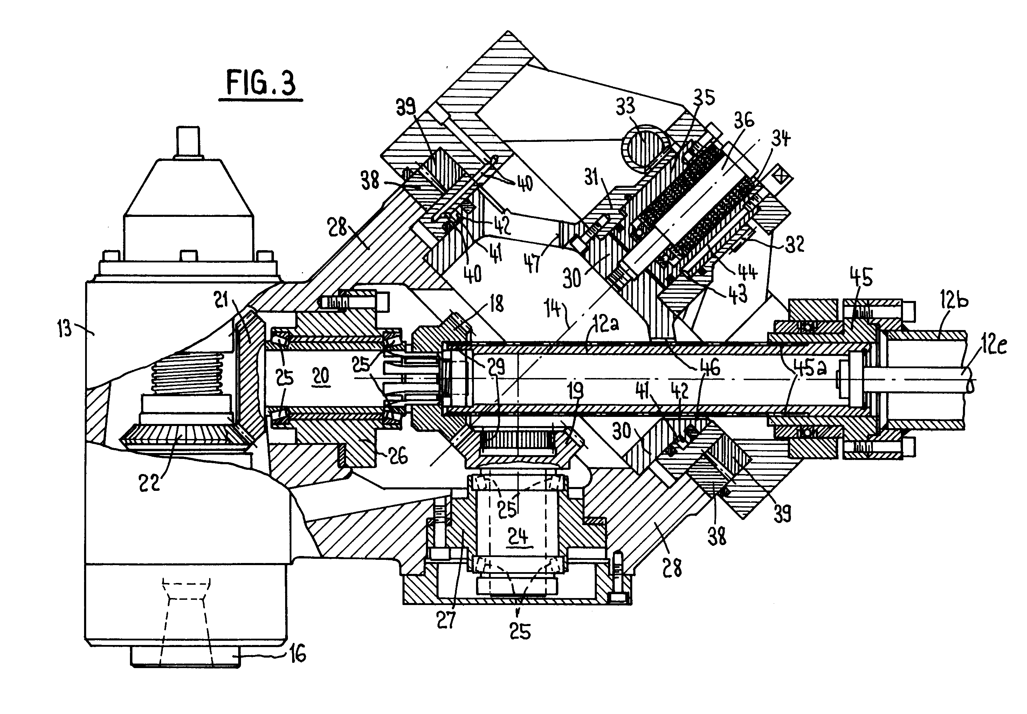

Figur 3 zeigt die wesentlichen Einzelheiten des Aufbaus, soweit sie für die Erfindung von Bedeutung sind. Entsprechende Teile sind gleich bezeichnet wie in den Figuren 1 und 2. Figur 3 zeigt das Kegelrad 22, welches mit der Spindel drehfest verbunden ist und mit dem Kegelrad 21 in Eingriff steht. Die Zwischenwelle 20 und die Hilfswelle 24 sind mittels Wälzlagern 25 in Lagerköpfen 26 bzw. 27 gelagert, welche mit dem einheitlichen Körper 28 des Spindelkopfes 13 verschraubt sind. Wie erwähnt, sind somit die Wellen 20 und 24 in starrer gegenseitiger Position gelagert.

Die beiden Kegelräder 18 und 19, von welchen das Kegelrad 18 fest mit der Welle 20 verkeilt ist, weisen an ihren freien Stirnseiten axial genutete Ausnehmungen 29 auf. Der entsprechend axial genutete, hohle Teil 12a der Antriebswelle greift bei der in Figur 3 dargestellten Arbeitsstellung des Spindelkopfes als Kupplungsteil in die genutete Ausnehmung des Kegelrades 18 und ist somit drehfest mit diesem Kegelrad gekuppelt.

Der Körper 28 des Spindelkopfes 13 ist mit einem Kuppelförmigen Träger 30 starr verbunden, welcher seinerseits mit einer Büchse 31 fest verschraubt ist.

Das äussere, obere Ende der Büchse 31 ist als Zahnkranz 32 ausgebildet, in welchen eine Zahnstange 33 eingreift, die mittels eines nicht dargestellten Zylinders verschoben werden kann, um über den Zahnkranz 32, die Büchse 31 und damit den Träger 30 und den Spindelkopf 13 in der oben beschriebenen Weise um je 180° aus der einen in die andere Arbeitsstellung zu schwenken. Eine Feder 34, die sich am inneren Ende einer Büchse 35 abstützt, zieht über einen Bolzen 36 den Träger 30 und damit den Körper 28 des Spindelkopfes nach oben und drückt die Kupplungs- und Orientierungsverzahnung eines mit dem Körper 28 verbundenen Zahnkranzes 38 in die Gegenverzahnung eines Zahnkranzes 39 am Spindelkopfträger 9. Dieser Andruck wird während des normalen Betriebs unterstützt durch Einleiten von Druckmedium durch Kanäle 40 in einen Ringraum 41, in welchem das Druckmedium gegen die Fläche 42 des Träger 30 drückt. Zwischen den Büchsen 31 und 35 ist ebenfalls ein Ringraum 43 gebildet, in welchen durch eine Bohrung 44 Druckmedium eingeleitet werden kann, um die Büchse 31 mit dem Träger 30 und dem Spindelkopf 13 bei drucklosem Ringraum 41 entgegen der Wirkung der Feder 34 nach unten zu verschieben und damit den Zahnkranz 38 aus dem Zahnkranz 39 auszurücken und die Schwenkung des Spindelkopfes 13 zu erlauben.

Das in Figur 3 rechts liegende Ende des Wellenteils 12a ist dort verschiebbar in einer Büchse 45 geführt, die ihrerseits im Spindelkopfträger drehbar gelagert ist. Die Büchse 45 ist mit dem hohlen Wellenabschnitt 12b verschraubt, der seinerseits mit dem hohlen Wellenteil 12c verbunden ist. Die Kolbenstange 12e und der damit verbundene Wellenteil 12a sind axial verschiebbar, wobei der Wellenteil 12a mit seiner genuteten Aussenseite mit dem innen entsprechend genuteten Ende 45a der Büchse 45 stets drehfest verbunden bleibt.

Der Hub des Kolbens 12d beziehungsweise der Kolbenstange 12e ist so bemessen, dass der Wellenteil 12a bei einer Bewegung des Kolbens 12d vom linken zum rechten Zylinderende soweit verschoben wird, dass er vollständig aus dem Bereich mitdrehender Teile des Spindelkopfes ausgerückt ist. Insbesondere ist er aus einer Durchbrechung 46 des Trägers 30 vollständig ausgerückt, so dass nun eine freie Verschwenkung des Spindelkopfes um 180° erfolgen kann. Es gelangt hierbei eine zweite Durchbrechung 47 in die vorher von der Durchbrechung 46 eingenommene Position, durch welche dann der Wellenteil 12a wieder nach links eingeschoben und mit dem nun koaxial zur Antriebswelle liegenden Kegelrad 19 gekuppelt werden kann. Die Endstellungen des Wellenteils 12a können hierbei verriegelt werden.

Die Funktionsweise ergibt sich weitgehend aus der vorstehenden Beschreibung. Bei dem in Fig. 3 dargestellten Betriebszustand ist der Wellenteil 12a mit dem Kegelrad 18 gekuppelt und kann die Spindel 16 antreiben. In der Ringkammer 41 herrscht Ueberdruck, der den Träger 30 nach oben drückt und damit den Zahnkranz 38 in den Zahnkranz 39 presst, was eine sehr genaue und stabile Lagebestimmung des Spindelkopfes ergibt. Soll der Spindelkopf in die Arbeitsstellung nach Fig. 2 überführt werden, wird bei stehender Maschine der Wellenteil 12a nach rechts verschoben und aus dem Kegelrad 18 sowie aus dem Träger 30 ausgerückt. Dann wird der Druck in der Ringkammer 41 aufgehoben, und es wird in der Ringkammer 43 Ueberdruck erzeugt. Damit wird der Träger 30 mit dem Spindelkopf nach links unten verschoben und der Zahnkranz 38 aus dem Zahnkranz 39 ausgerückt. Ueber die Zahnstange 33 wird nun den Spindelkopf um 180° verschwenkt. Dann wird der Druck in der Ringkammer 43 aufgehoben, womit die Feder 34 über den Bolzen 36 und den Träger 30 den Spindelkopf 13 anhebt und die Zahnkränze 38 und 39 weich einrückt. Sodann wird die Ringkammer 41 wieder unter Druck gesetzt und schliesslich der Wellenteil 12a durch die Durchbrechung 47 nach links verschoben und mit dem Kegelrad 19 gekuppelt. Die Maschine ist damit betriebsbereit um mit der nun horizontal liegenden Spindel 16 eine Bearbeitung vorzunehmen.

Nach dieser Beschreibung der wesentlichen konstruktiven Einzelheiten sollen nochmals deren Vorteile zusammengefasst werden. Alle Getrieberäder 18, 19, 21 und 22 sind im Spindelkopf 13 in unveränderter gegenseitiger Anordnung untergebracht. Es ergibt sich damit ein besonders einfaches, kompaktes Getriebe und eine ensprechend leichte Ausführung des Spindelkopfes. Es ist einfach, die Präzisionsanforderungen im Getriebe zu erfüllen. Sollte sich bei der jeweiligen Schwenkung des Spindelkopfes ergeben, dass die Achsen der Kegelräder 18 beziehungsweise 19 nicht genau dieselbe Lage erreichen, gestattet der auf erhebliche Länge freitragend angeordnete Wellenteil 12a einen Ausgleich. Dieser Wellenteil ist deshalb verhältnismässig lang auszuführen und zum Aus- und Einrücken, um eine entsprechend lange Strecke zu verschieben, weil er vollständig aus den zu verschwenkenden Teilen des Spindelkopfes ausgerückt werden muss, insbesondere aus dem kuppelförmigen Träger 30. Da die Mechanismen für die Schwenkbewegung und zum Verriegeln des Spindelkopfes im Spindelkopfträger angeordnet sind, ergibt sich im Zentrum ein freier Raum für die Kegelräder 18 und 19, den kuppelförmigen Träger 30 und den Wellenteil 12a. Diese Ausführung begünstigt den bereits erwähnten kompakten Aufbau des Spindelkopfes. Die Antriebseinheit kann in unmittelbarer Nähe des Befestigungspunktes des Spindelkopfträgers am Maschinengestell angeordnet werden.

Es sind Ausführungsvarianten möglich. Entscheidend ist die Voraussetzung, dass zwei spiegelbildlich angeordnete, dauernd in Drehverbindung mit der Spindel stehende Kupplungen angeordnet sind, welche wahlweise mit der Antriebswelle gekuppelt werden können. So könnte beispielsweise die Spindel 16, statt von der Welle 20 über die Kegelräder 21 und 22, von der Welle 24 beziehungsweise vom Kegelrad 19 über ein Stirnradgetriebe angetrieben werden. Die jeweiligen Endstellungen bei der axialen Verschiebung des Wellenteils 12a bzw. des Spindelkopfes und bei der Verschwenkung des Spindelkopfes können durch berührungslose Geber bestimmt und damit die Antriebsmittel für diese Bewegungen gesteuert werden.

**Patentansprüche**

1. Werkzeugmaschine mit einem Spindelkopf (13), der an einem Spindelkopfträger (9) schwenkbar ist, um eine Spindel (16) in zwei rechtwinklig zueinander stehende Arbeitsstellungen zu bringen, wobei im Spindelkopf (13) eine zur Spindel (16) rechtwinklig stehende Zwischenwelle (20) gelagert ist, die in dauernder Antriebsverbindung mit der Spindel steht und bei einer der zwei Schwenkstellungen des Spindelkopfes (13) bzw. der Spindel (16) mit einer Antriebswelle (12) im Spindelkopfträger (9) kuppelbar ist, dadurch gekennzeichnet, dass der Spindelkopf (13) um eine zu seiner Spindelachse (15) um 45° geneigte Achse (14) schwenkbar ist, dass die Spindel (16) derart angeordnet ist, dass ein in die Spindel (16) eingesetztes Werkzeug sich für beide Schwenkstellungen etwa im Schnittpunkt der Spindelachse (15) und der Schwenkachse (14) befindet, und dass die Zwischenwelle (20) mit einer weiteren Hilfswelle (24) in dauernder Drehverbindung steht, wobei die Zwischenwelle (20) und die Hilfswelle (24) spiegelbildlich zur Schwenkachse (14) liegende Kupplungsmittel (29) zum wahlweisen Kuppeln mit der Antriebswelle (12) aufweisen.

2. Maschine nach Anspruch 1, dadurch gekennzeichnet, dass die Zwischenwelle (20) und die Hilfswelle (24) und auf denselben befestigte, in gegenseitigem Eingriff stehende Kegelräder (18, 19) spiegelbildlich zur Schwenkachse (14) des Spindelkopfes (13) angeordnet sind.

3. Maschine nach Anspruch 1 oder 2, dadurch gekennzeichnet, dass die Antriebswelle (12) einen axial verschiebbaren Kupplungsteil (12a) aufweist.

4. Maschine nach Anspruch 3, dadurch gekennzeichnet, dass sich in der Antriebswelle (12) ein mitrotierender Betätigungszylinder für den Kupplungsteil (12a) befindet.

5. Maschine nach einem der Ansprüche 1-4, dadurch gekennzeichnet, dass der Spindelkopf (13) mittels eines in den Spindelkopfträger (9) greifenden Trägers (30) schwenkbar gelagert ist, dass der Träger (30) zur Schwenkachse (14) spiegelbildlich angeordnete Durchtrittsöffnungen (46, 47) für die Antriebswelle (12) aufweist, und dass die Antriebswelle bzw. ein Kupplungsteil (12a) derselben um einen axialen Hub zum Ausrücken derselben bzw. ihres Kupplungsteils (12a) aus dem Träger (30) verschiebbar ist.

6. Maschine nach einem der Ansprüche 4 oder 5, dadurch gekennzeichnet, dass die Antriebswelle (12) als Hohlwelle (12b) ausgebildet ist, in welche der Kupplungsteil (12a) eingefahren werden kann, wobei der Kupplungsteil (12a) über eine Kolbenstange (12e) mit dem Kolben (12d) des Betätigungszylinders verbunden ist.

7. Maschine nach Anspruch 5 oder 6, dadurch gekennzeichnet, dass axial und radial ausserhalb des kuppelförmigen Trägers (30) Antriebsmittel zur Verschwenkung des Spindelkopfes (13) und Mittel zur Verriegelung des Spindelkopfes (13) in seiner jeweiligen Arbeitsstellung vorhanden sind.

8. Maschine nach Anspruch 7, dadurch gekennzeichnet, dass axial ein- und ausrückbare Zahnkränze (38, 39) zur Lagebestimmung des Spindelkopfes (13) am Spindelkopfträger (9) vorgesehen sind, und dass die Zahnkränze druckmittelgesteuert ein- und ausrückbar sind.

## Claims

1. A machine tool having a spindle nose (13) which is pivotable on a spindle nose support (9) in order to bring a spindle (16) into two working positions which are perpendicular to each other, an intermediate shaft (20) which is perpendicular to the spindle (16) being journalled in the spindle nose (13), said intermediate shaft being in a permanent driving connection with the spindle and being capable of being coupled to a driving shaft (12) in the spindle nose support (9) in one of said two pivoted positions of the spindle nose (13), i.e. of the spindle (16), characterized in that the spindle nose (13) is pivotable around an axis (14) which is inclined by 45° with respect to the spindle axis (15) of said spindle nose, that the spindle (16) is disposed in such a manner that a tool which is inserted in the spindle (16) is positioned at the intersection of the spindle axis (15) and the pivot axis (14) approximately in both pivoted positions, and that the intermediate shaft (20) is in a permanent rotative connection with another auxiliary shaft (24), the intermediate shaft (20) and the auxiliary shaft (24) being provided with coupling means (29), which are disposed in mirror-image symmetry with respect to the pivot axis (14), for a selective coupling with the driving shaft (12).

2. A machine according to claim 1, characterized in that the intermediate shaft (20) and the auxiliary shaft (24) as well as mutually engaged bevel wheels (18,19) secured thereon are disposed in mirror-image symmetry with respect to the pivot axis (14) of the spindle nose (13).

3. A machine according to claim 1 or 2, characterized in that the driving shaft (12) is provided with an axially displaceable coupling element (12a).

4. A machine according to claim 3, characterized in that an actuating cylinder for the coupling element (12a) is disposed in the driving shaft (12), said cylinder rotating with the latter.

5. A machine according to any one of claims 1 to 4, characterized in that the spindle nose (13) is pivotably journalled by means of a support (30) which is imbricated in the spindle nose support (9), that the support (30) is provided with passages (46,47) for the driving shaft (12) which are disposed in mirror-image symmetry with respect to the pivot axis (14), and that said driving shaft, i.e. a coupling element (12a) thereof is displaceable by an axial stroke in view of disengaging the same, i.e. its coupling piece (12a) from the support (30).

6. A machine according to any one of claims 4 or 5, characterized in that the driving shaft (12) is conformed as a hollow shaft (12b) in which said coupling piece (12a) is insertable, the coupling part (12a) being connected to the piston (12d) of said actuating cylinder by a piston rod (12e).

7. A machine according to claim 5 or 6, characterized in that driving means for the pivotment of the spindle nose (13) and means for blocking the spindle nose (13) in its respective working position are provided axially and radially outside the dome-shaped support (30).

8. A machine according to claim 7, characterized in that axially engageable and disengageable toothed crowns (38,39) are provided in order to determine the position of the spindle nose (13) with respect to the spindle nose support (9), and that said toothed crowns are engageable and disengageable by pressure fluid control.

## Revendications

1. Machine-outil ayant un nez de broche (13) qui est pivotable sur un support de nez de broche (9) afin d'amener une broche (16) dans deux positions de travail perpendiculaires l'une à l'autre, un arbre intermédiaire (20) perpendiculaire à la broche (16) étant logé dans le nez de broche (13), ledit arbre intermédiaire étant en liaison permanente d'entraînement avec la broche et capable d'être accouplé à un arbre d'entraînement (12) dans le support de nez de broche (9) dans une des deux positions de pivotement du nez de broche (13), c'est-à-dire de la broche (16), caractérisée en ce que le nez de broche (13) pivote autour d'un axe (14) incliné de 45° par rapport à l'axe de la broche (15) dudit nez de broche, que la broche (16) est disposée de telle façon qu'un outil inséré dans la broche (16) se trouve approximativement au point d'intersection de l'axe de la broche (15) et de l'axe de pivotement (14) dans les deux positions de pivotement, et que l'arbre intermédiaire (20) est en liaison rotative permanente avec un arbre auxiliaire (20) supplémentaire, l'arbre intermédiaire (20) et l'arbre auxiliaire (24) présentant des moyens d'accouplement (29), disposés symétriquement par rapport à l'axe de pivotement (14), pour l'accouplement sélectif à l'arbre d'entraînement.

2. Machine selon la revendication 1, caractérisée en ce que l'arbre intermédiaire (20) et l'arbre auxiliaire (24), ainsi que des roues coniques (18,19) y attachées et mutuellement engrenées, sont disposés symétriquement par rapport à l'axe de pivotement (14) du nez de broche (13).

3. Machine selon la revendication 1 ou 2, caractérisée en ce que l'arbre d'entraînement (12) présente un élément d'accouplement (12a) axialement déplaçable.

4. Machine selon la revendication 3, caractérisée en ce qu'un cylindre d'actionnement pour l'élément d'accouplement (12a) se trouve dans l'arbre d'entraînement (12), ledit cylindre étant en rotation solidaire avec ce dernier.

5. Machine selon l'une quelconque des revendications 1 à 4, caractérisée en ce que le nez de broche (13) est logé de manière pivotante au moyen d'un support (30) qui s'imbrique dans le support de nez de broche (9), que le support (30) présente des ouvertures de passage (46, 47) pour l'arbre d'entraînement (12) disposées symétriquement, et que l'arbre d'entraînement, c'est-à-dire un élément d'accouplement (12a) de ce dernier, est déplaçable d'une course axiale afin de dégager ledit arbre d'entraînement ou son élément d'accouplement (12a) du support (30).

6. Machine selon l'une quelconque des revendications 4 ou 5, caractérisée en ce que l'arbre d'entraînement (12) est conformé en arbre creux (12b) dans lequel l'élément d'accouplement (12a) est capable d'être inséré, l'élément d'accouplement (12a) étant relié au piston (12d) dudit cylindre d'actionnement par l'intermédiaire d'une tige de piston (12e).

7. Machine selon la revendication 5 ou 6, caractérisée en ce que des moyens d'entraînement pour le pivotement du nez de broche (13) et des moyens pour le verrouillage du nez de broche (13) dans sa position de travail respective sont présents à l'extérieur axialement et radialement du support (30) en forme de coupole.

8. Machine selon la revendication 7, caractérisée en ce que des couronnes dentées (38,39) axialement emgageables et dégageables sont prévues pour déterminer la position du nez de broche (13) par rapport au support de nez de broche (9), et que ces couronnes dentées sont engageables et dégageables sous commande d'un fluide de pression.

FIG.1

FIG.2

FIG.3